Europäisches Patentamt

(19) European Patent Office

Office européen des brevets

(11) Publication number: **0 195 679 B1**

# EUROPEAN PATENT SPECIFICATION

(45) Date of publication of patent specification :
06.03.91 Bulletin 91/10

(51) Int. Cl.⁵ : **B01D 36/04, A01C 3/02**

(21) Application number : 86302076.4

(22) Date of filing : 20.03.86

(54) A store and a method for de-watering slurry.

(30) Priority : 20.03.85 GB 8507240
13.05.85 GB 8512055

(43) Date of publication of application :
24.09.86 Bulletin 86/39

(45) Publication of the grant of the patent :
06.03.91 Bulletin 91/10

(84) Designated Contracting States :
AT BE CH DE FR IT LI LU NL SE

(56) References cited :
DE-A- 2 802 701
DE-A- 2 810 008

(56) References cited :
DE-C- 539 424
GB-A- 619 934
GB-A- 2 106 975
GB-A- 2 142 689

(73) Proprietor : Birkett, Melvin Herbert
Abbotswell Cottage
Rievaulx near Helmsley North Yorkshire (GB)

(72) Inventor : Birkett, Melvin Herbert
Abbotswell Cottage
Rievaulx near Helmsley North Yorkshire (GB)

(74) Representative : Williams, John Francis et al
J.F. Williams & Co 34 Tavistock Street
London WC2E 7PB (GB)

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a store and a method for de-watering slurry or sludge.

For the purpose of the present specification, the word 'slurry' will be used for any material having a high liquid content. This is found as the output or by-product of industrial processes, or on farms. There is often a requirement to separate so far as possible the solids from the liquid. When appearing as waste, they frequently represent a disposal problem, particularly with new realisation of environmental problems. Often, either solid or liquid may be toxic.

A basic system for handling slurries is described in US Patent 1757187, which describes a gravity settlement tank in which solid matter is allowed to thicken and then, while still liquid, is drawn off through an outlet in the bottom of the tank. The liquid is strained off through a filter wall of fine mesh. The operation is a short-term one, and the apparatus is not suitable for a slurry which consists of a suspension of fine solids requiring a period of months to settle out. Equally, it cannot be used when the solid residues are required to be relatively solid, since they would then block the outlet.

British Patents 2043145 and 2120309 describe slurry stores for use on farms, where the solid content of the slurry is fairly high and the degree of de-watering is not critical. These employ walls consisting of spaced concrete panels but if a slurry of low solid content were put in, it would simply leak out without separating.

The invention aims to provide a store and a method for de-watering slurry regardless of its solid content, which can produce liquid of any desired maximum solid content, and solid residue of any desired degree of dryness. Preferably, the solid shall be able to be taken away by a skip or truck for dumping as land-fill material.

Accordingly, the invention provides a store for de-watering slurry comprising a water-tight enclosure on an impermeable base, said enclosure being divided into a first space and a second space by a water-permeable wall, the second space having a water outlet controlled by means which can permit outflow at progressively lower levels of said space.

By virtue of this construction initial leakage of slurry from the major space to the minor space is of no importance, the water only being drained off from the top of the minor space after sufficient settlement. Preferably, the permeable wall is formed by spaced panels.

From another aspect, the invention also provides a method of de-watering slurry by gravity settlement in a water-tight enclosure on an impermeable base, the enclosure being divided into at least a first space and a second space by a permeable wall, comprising the steps of : initially putting a quantity of slurry in the first space so that it flows through the wall into the second ; allowing the solids to settle ; permitting outflow of clearer water from the second space at the then top level of the water, whereby the slurry then tends to flow from the first to the second space through the permeable wall and solids collect in the interstices of that wall ; thereafter releasing water at progressively lower levels of the second space while the level in the first space remains higher ; and allowing the water in the first space to seep through the permeable wall using solids held in the wall as a filter medium.

The invention will now be described in greater detail, by way of example, with reference to the drawings, in which :

Figure 1 is a perspective view of a store for de-watering slurry in accordance with the invention ;

Figure 2 is a perspective view of a modified form of drainable store ;

Figure 3 shows the construction of the walls ;

Figure 4 shows a sectional view of an adjustable weir ;

Figure 5 shows a sectional view on line 5-5 in Fig.4.

Figure 6 shows a plan view of a different form of complete slurry store according to the invention ;

Figure 7 shows a section on line A-A in Fig.6 ;

Figure 8 shows a part of Figure 7 to an enlarged scale ;

Figure 9 shows a sectional view of a further embodiment of a store ;

Figure 10 shows a plan view of a yet further embodiment of a slurry store according to the invention ; and

Figure 11 shows a store in the form of a single transportable tank.

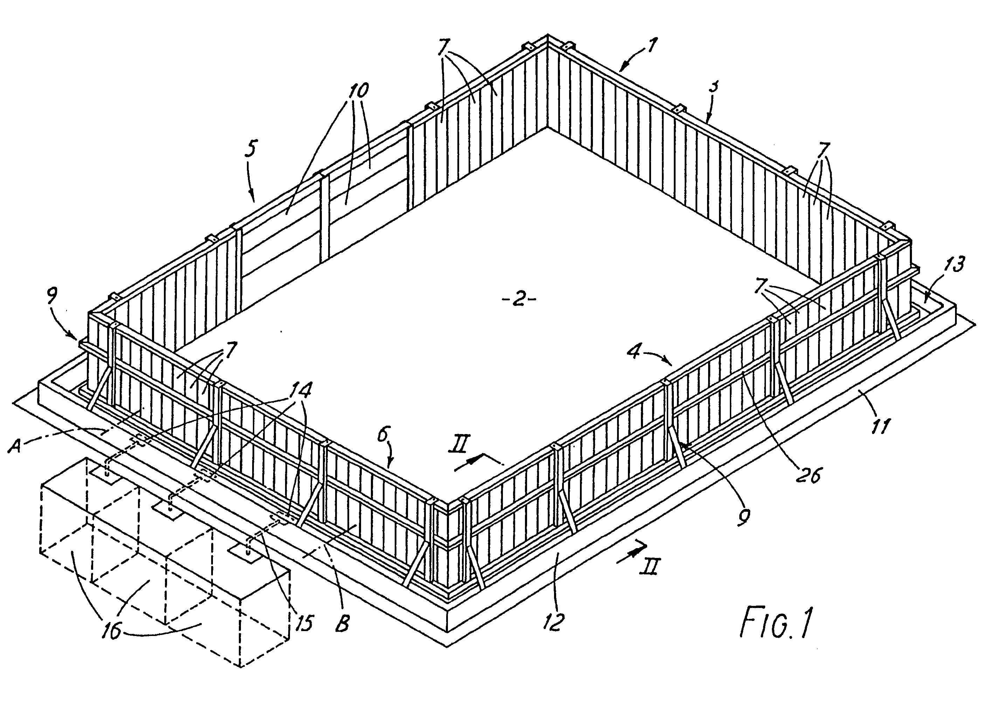

Referring firstly to Figure 1, a drainable store comprises an enclosure 1 including a concrete base 2 and four walls 3, 4, 5 and 6. These walls comprise a plurality of substantially vertical panels 7 of a suitable concrete carried in a metal framework 9, with a very slight spacing between each panel. In the wall 5 there are a set of horizontal panels 10 which are sealed but can be removed upwardly to provide access to the store for removal of solids.

The base 2 extends beyond the enclosure so as to form a surround 11. On this surround 11 there is an upstanding wall 12 which encircles the store. This forms a channel 13 made up of a base portion formed by the surround 11, a side portion formed by the wall 12 and the other side portion formed by the rear of the panels 7 and 10. The panels 7 have, at least in the walls 4 and 5, a small spacing between them so that liquid can pass out of the enclosure 1 into the channel 13. The channel 13 is continuous all around the enclosure but a weir formation (not shown) is provided at the points marked A and B for a purpose to be described. The panels 7 are not provided with spacings between the points A and B.

Also, since it is intended to load the store with material at the end at which the wall 3 is situated, this wall also may be without spacings.

Between the points A and B, the channel 13 is provided with outlets 14 for liquid. These outlets 14 are connected via pipes 15 to one or more storage tanks 16. It is to be noted that the wall 12 is shown in figure 1 at a reduced height to enable the other details of the channel 13 to be seen. Normally, its height will be from 3/4 to full height of the enclosure 1.

The weirs (not shown) at the points A and B in figure 1 comprise a wall of concrete extending a small way up the height of the channel, for example one seventh of the height. On top of this wall are removable elements which make the height of the weir adjustable. They may, for example, comprise wooden or metal planks, forming a wall of maximum height only just short of the height of wall 12.

The operation of the drainable store will now be described :

With the store empty, a slurry to be drained is poured into the store over the wall 3. Liquid from the slurry and initially the solids too will pass through the walls via the spacings between the panels 7 and into the channel 13. The liquid level will be the same in the enclosure 1 and in the channel 13. At the start, the weirs will be at their maximum height so as to ensure that the channels form a temporary outer store, and that as the solids settle only liquid passes over them into the part of the channel between points A and B and thus into the tank or tanks 16. It will be appreciated that the appropriate part of the wall 6 is without spacings so that the slurry cannot pass direct into the outlet part of the channel. If any does initially pass through this wall it will soon stop, because there are no actual spacings between the panels 7 and any minor cracks left will soon be shut off by the solids in the slurry.

As the level of slurry in the store rises, the solids will settle on the base and also settle in the gaps between the panels to form a filter for the liquid and ensure that little if any solids will pass through the walls. Thus as the store fills, the amount of the slurry escaping will reduce, the solids in the channel 13 will settle on the base, and the height of the weirs can be steadily reduced by removing the planks. The contents of the channel 13, which is material which has not passed over the weir, can at the start be pumped back into the store so as to preserve the solids and stop them from reaching the liquid tank(s) 16.

Once the store has been filled and allowed to drain over a suitable period, which may be weeks or months, the solids may be removed, access to the store being had by removal of the section of horizontal panels 10. The size of this section is such that a mechanical shovel or bulldozer can enter.

It will be appreciated that various modifications may be made to the above described embodiment, without departing from the scope of the invention. For example, although the store has been shown as square, any other suitable shape may be used, e.g. polygonal. While the panels 7 and 10 have been described as concrete, they may be of any other material, e.g. rough sawn wood, which is resistant to destruction by the material of the slurry. In any event, the concrete chosen for use must take into account the material intended to be drained so that it is not corroded away.

The specific supporting arrangements of the panels may be varied and the panels could be supported to be inclined rather than vertical, if desired. They are designed to be easily removable for cleaning and repair. The weir arrangements could be omitted if outlet was not arranged directly from the channel 13. For example, the wall 12 could continue right around the enclosure 1, with a series of outlets, one above another and each controlled by a valve, arranged in the wall to release the liquid to the tank(s).

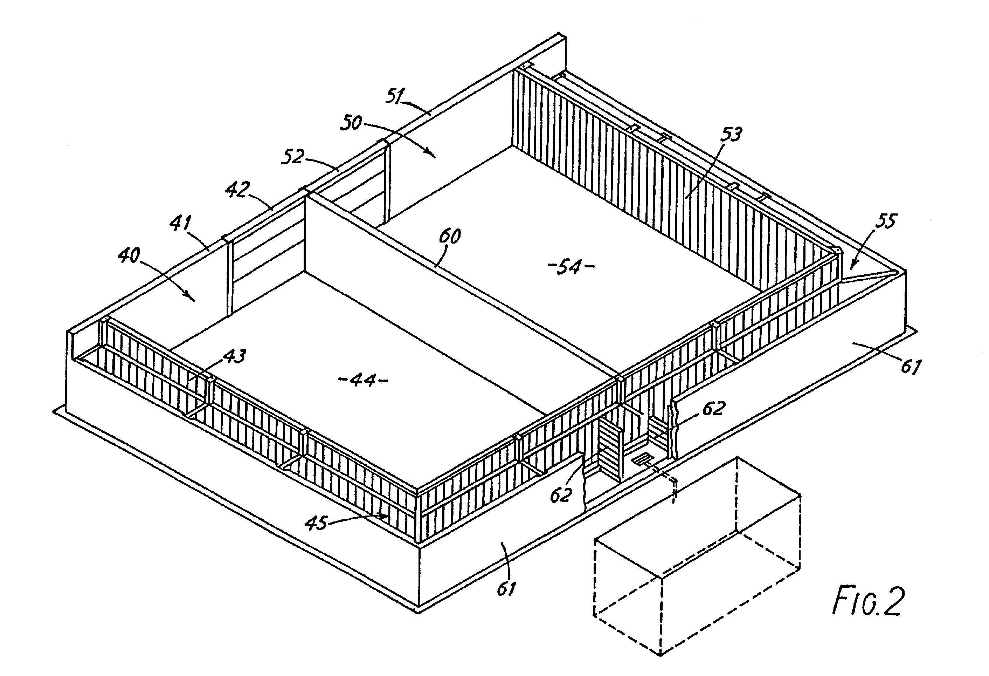

A modified form of drainable store is shown in Figures 2 to 5.

In this case two stores 40, 50 are built side by side and share a solid dividing wall 60. The back wall 41, 51 is also solid and includes access gates 42, 52 to the two stores. An inner permeable wall 43, 53 in each case encloses an inner store 44, 54 and divides it from an outer L-shaped store or channel 45, 55 lying between it and the other impermeable wall 61 which extends around the other three sides. The construction of walls 43, 53 will be described later. The overall dimensions might be 15 m × 20 m.

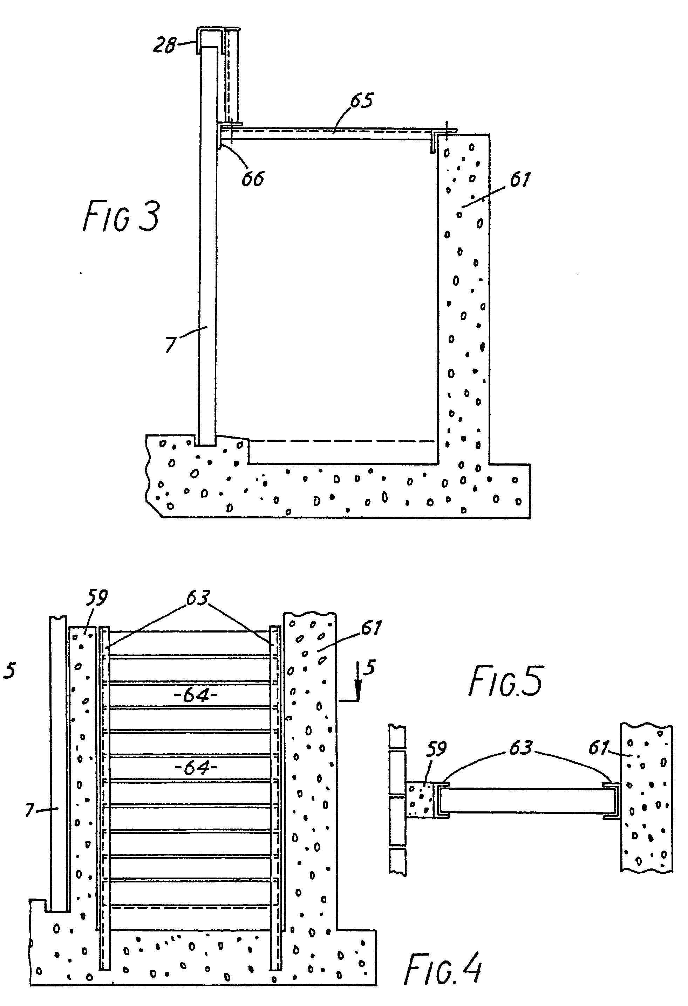

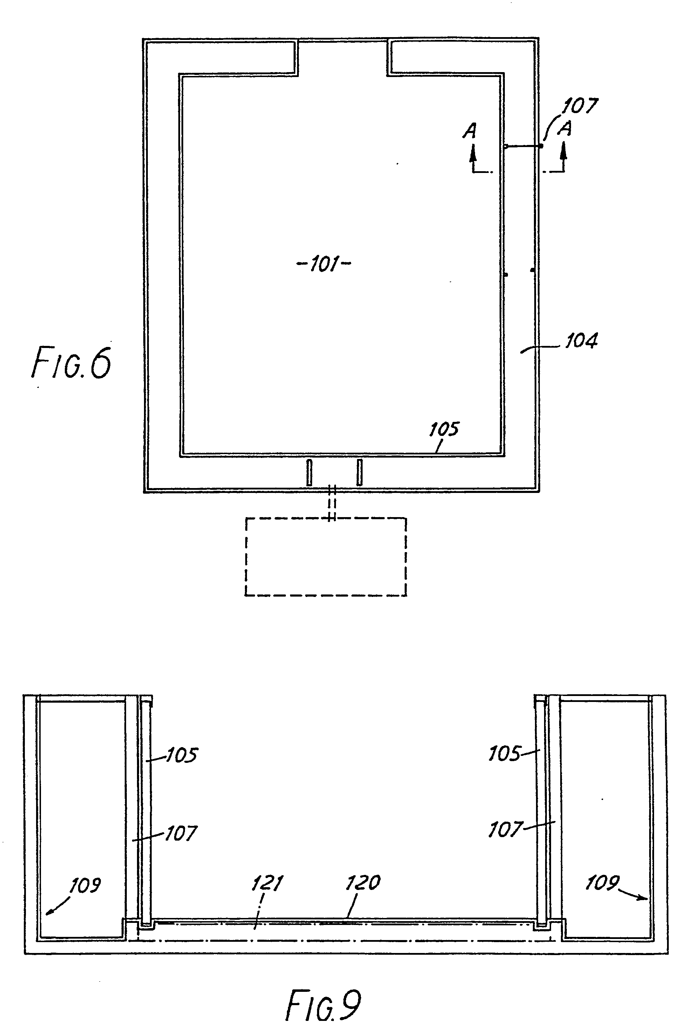

The outer wall 61 has a height about 4/5 ths of that of the wall 43, 53 so that the effect is of an inner store within an outer one. The outer store or channel 45, 55 ends at a weir 62, as illustrated in Figs 4 and 5.

Each weir is supported between a solid pillar 59 and the outer wall 61. Channel-section metal bars 63 are fixed each side, and a series of tongued-and-grooved wood or concrete planks 64 are slid in from the top to create a solid wall of the desired height. Planks can be removed from the top to allow clarified liquid to run over and away to the drainage tank.

Since there is a solid wall 61 lying outside the inner walls 43, 53, the former can provide part of the support for the latter, as seen in Figures 2 and 3. A bar 65 serves as a horizontal stay connected to the top of wall 61 at one end and at the other to a horizontal bar 66 extending across the vertical panels 7 forming the inner walls. An inverted channel member 28 locates the top of the panels 7. A catwalk for inspecting the stores can be laid on the bars 65, and removed when working in the channels 45, 55.

The operation of each drainable store 40, 50 is the same as that described for figure 1. However, the cost of construction is very considerably reduced because of the single back wall 41, 51 and shared wall 60, and the simplified metalwork supporting the inner walls 43, 53.

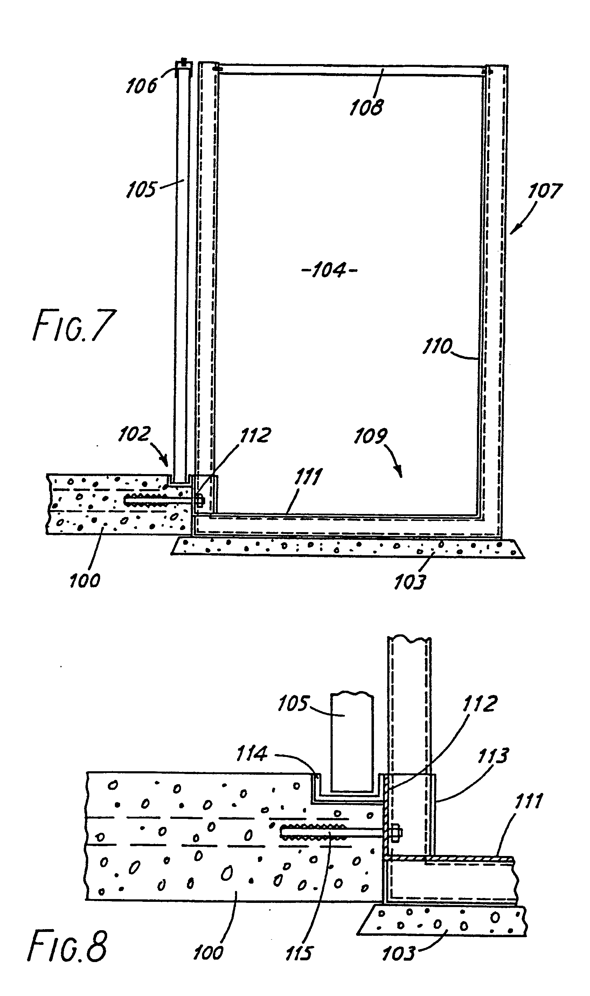

Figures 6, 7 and 8 illustrates a slurry store which is designed so as to be factory constructed so far as possible, and capable of being mounted and demounted quickly using only relatively unskilled labour. Construction work necessary on site is confined to a flat concrete base, as seen in Fig.7. A centre base area 100 for the inner store 101 has a recess 102 formed by a rabetted edge. Peripherally outside this is a levelling screed 103 which however does not itself form the base of the outer store or channel 104, but only a support for a pre-fabricated outer store.

The inner permeable wall 105 is formed in the same manner as in the previous applications, using a succession of non-corrodable panels spaced slightly apart. These are held at the bottom in the recess 102 and at the top in a metal channel section 106. The remainder of the slurry store is pre-fabricated of metal, and rests on the screed 103. It consists of a succession of aligned U-shaped metal frames 107 at about 1 metre centres, each joined across the top by a bar 108. Attached to the inner surfaces of these frames are approximately 5 metre lengths of L-shaped sheet metal 109, each comprising an upright member 110, a base member 111 and a lip 112. The base 111 is pierced at intervals at the points where the frames 107 pass through and a short tube 113 is formed or added. Along the outside of the lip 112 is fixed, e.g. by welding, a channel member 114 which receives the bottom edges of the panels. The joint between the metal sections 109 and the concrete base area 100 must be sealed e.g. by a rubberised or mastic sealant. Bolts 115 at intervals secure the metalwork to the concrete.

It will be seen that the metal frames and the metal sections together form the outer impermeable wall, and also the support for the inner permeable wall. They can be carried to a site and erected without difficulty on the prepared concrete base.

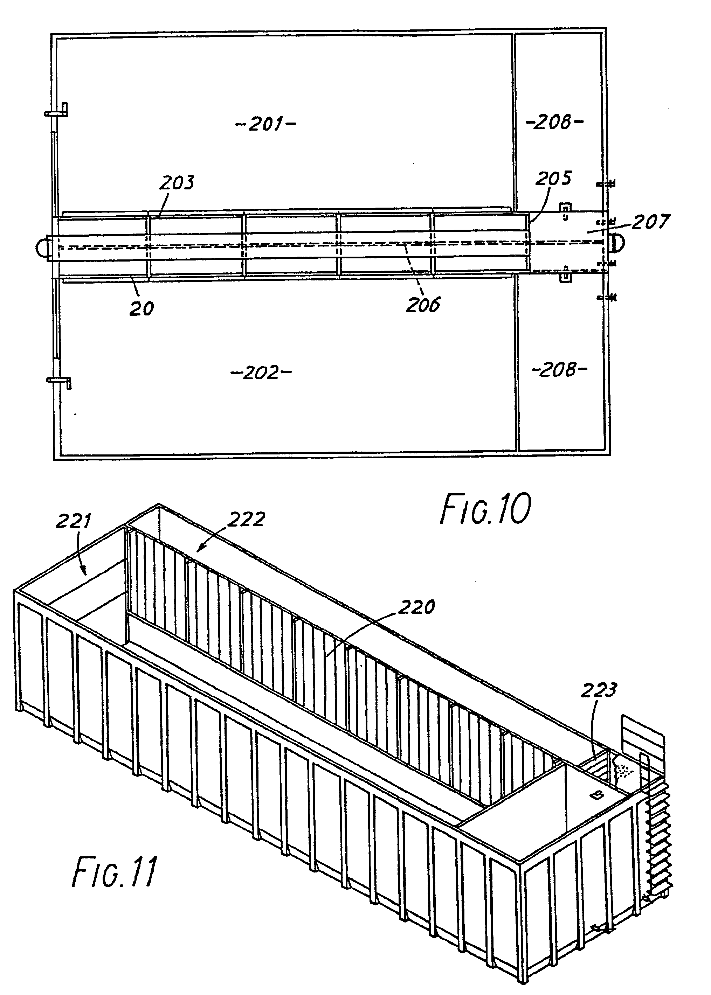

A further embodiment of a transportable tank is shown in Fig.9. In this case, a section through a complete store from side-to-side is shown. This is fabricated entirely in metal. It has almost the same construction as in Figures 7 and 8, but the sheet metal forming the wall and base of the outer store or channel is extended right across the base of the inner store. This inner base 120 is raised on transverse beams 121. The section may be made in any desired length suitable for transport. For example, the section may be 6 metres side-to-side, and 18 metres long, to fit on a lorry trailer. To make larger tanks, the section may be 12 metres wide, divided along the middle for transport and welded or bolted together on site.

It will be obvious that in both these embodiments, particular arrangements are required at the corners of the store, and across the ends of the embodiment of Figure 9. But these details together with the weirs, will be easily devised for the purposes required.

Because of the need to de-water a number of different non-mixable slurries, a battery of such stores may be appropriate, placed on hard standing close to a factory building. Such a battery may also be an advantage where a number of different slurries, each having a different settling rate, is to be treated.

The practical operation of such de-watering stores may take the following pattern.

An industrial slurry may contain from 1% to 15% solids, and it is fed into a store of suitable size such that the level rises by 25 to 50 mms per day. It may thus take 20 to 30 days to become full, but during this time nothing is allowed to escape, the weirs or valves being fully closed. Also during this period, the solids settle steadily in both the inner and the outer stores, and because of the flow through the permeable wall, the solids are also starting to be trapped in the slits or apertures of the latter.

At the end of this period, the topmost level of the weir may be removed, and the relatively clear liquid released to a storage tank where it can be neutralised if necessary. Progressively over the following 30 days, the height of the weir can be reduced, while slurry continues to be added to the inner store. The progressive build-up of solid against the permeable inner wall provides the filtering action. Any solids which remain in the outer store or channels as the weirs are lowered can be pumped back into the inner store.

Slurry may continue to be added to the store for a period or perhaps 3 months, and the contents may be left to de-water for a further three months after that. The precise periods required for all these stages depend upon the nature of the slurry to be treated. The object in each case is to produce as dry a solid residue as possible, and a liquid which is as free as possible of solids. If necessary, the liquid can be easily chemically treated so that it can be discharged safely into a drainage system.

It is to be noted that the stores described can also be used successfully for de-watering slurries of which the solids are economically valuable. For example, the stores can accept a coal slurry to be de-watered, the coal solids being removed for sale and the water being re-circulated to wash further quantities of solids.

Figure 10 shows a store for de-watering slurry which is identical in principle to all those described earlier. In this case, a second space 200 is formed as a centre channel through the first space 201, 202. A permeable wall 203, formed as usual by a series of upright panels divides the first and second spaces. A weir 205 controls the outlet from the second space.

The space 200 may itself be divided by a central wall 206, although this is not essential.

If it is so divided, the weir 205 may also be in two halves.

This version of the store illustrates a further advantageous method of operation. As the liquid passes over the weir, it reaches a first outlet chamber 207. From this, the liquid can be drained into a liquid holding tank 208 which can retain it for a holding period while it is chemically treated. Only after this is it passed out into the normal sewer system, for example.

Figure 11 illustrates a single, transportable tank which incorporates all the necessary features to operate according to the invention. A longitudinal permeable wall 220 divided the first space 221 from the second space 222. A weir 223 controls the outflow from the latter. The tank may be overall 12 m by 3.5 m.

Two particularly advantageous steps may be taken to improve the methods described so far. First, a coagulating agent, e.g. chopped straw, may be added if desired to assist in producing rapid settlement of the solids in the slurry. Second, given a battery of stores arranged adjacent to each other, the nature of the different slurries to be treated can be added differentially to the stores in such a way as to optimise settlement. For example, a thick slurry may be added to an existing thin one, or a mineral one to a flocculent one. In addition, it is possible to prime a store which is being filled from the clean state, by pumping into it a partially thickened slurry taken from another store. This allows a more rapid initial formation of solids in the interstices of the permeable wall, and allows the full filter action to be started up more quickly.

**Claims**

1. A store for de-watering slurry comprising a water-tight enclosure (12, 61) on an impermeable base (11), said enclosure being divided into a first space (2, 44, 54) and a second space (13, 45, 55) by a water-permeable wall (4, 43, 53), wherein the second space (13, 45, 55) has a water outlet controlled by means (A, B, 62) which can permit in use outflow at progressively lower liquid levels in said second space.

2. A store as claimed in claim 1 wherein said means comprises a weir (62) made up of a series of horizontal panels (64) placed one on another and progressively removable from the top so as to lower the weir level.

3. A store as claimed in claim 1 wherein said means comprises a series of taps positioned one above another.

4. A store as claimed in any preceding claim having a sealable closure (5) in a wall of the first space (2) large enough to admit a vehicle for handling the de-watered solids.

5. A store as claimed in any preceding claim wherein said water permeable wall (4) consists of upright elongate panels (7) held by a framework, with a slight gap between adjacent panels.

6. A store as claimed in claim 5 wherein said panels are of rough sawn timber.

7. A store as claimed in any preceding claim wherein a series of first (44) and second chambers (54) are arranged adjacently so as to share one or more walls.

8. A store as claimed in any preceding claim wherein within a single enclosure are two first spaces (201, 202), two permeable walls (203, 204) and a single second space common to said two first spaces.

9. A store as claimed in any preceding claim wherein a third space (207) receives the water from the water outlet and holds it for a period before disposal.

10. A store as claimed in any preceding claim which is formed of a plurality of pre-fabricated metal or concrete sections.

11. A store as claimed in any of claims 1 to 9 which is formed as a single transportable tank.

12. A method of de-watering slurry by gravity settlement in a water-tight enclosure (12, 61) on an impermeable base, the enclosure being divided into at least a first space (2, 44, 54) and a second space (13, 45, 55) by a permeable wall (4, 43, 53), comprising the steps of : initially putting a quantity of slurry in the first space so that it flows through the wall into the second ; allowing the solids to settle ; permitting outflow of clearer water from the second space at the then top level of the water, whereby the slurry then tends to flow from the first to the second space through the permeable wall and solids collect in the interstices of that wall ; thereafter releasing water at progressively lower levels of the second space while the level in the first space remains higher ; and allowing the water in the first space to seep through the permeable wall using solids held in the wall as a filter medium.

13. A method as claimed in claim 12 wherein following the initial quantity of slurry, further quantities continue to be added to the first space until it is as full as desired and for as long as the slurry continues to de-water at a satisfactory rate through the permeable wall.

14. A method as claimed in claim 13 wherein said initial quantity of slurry has a higher proportion of solids than is expected in that to be added later, thus ensuring the initial collection of solids in the permeable wall.

15. A method as claimed in one of claims 12 to 14, wherein after an initial period in which both liquid and solids have flowed through the permeable wall into the second space, they are pumped back from the second space into the first space.

16. A method as claimed in any of claims 12 to 15 wherein solid particulate material is added to the first space to assist settlement of solids.

17. A method as claimed in any of claims 12 to 16 wherein the nature of the slurries added successively to the store are matched in terms of proportions and natures of solids so as to optimise settlement thereof.

18. A method as claimed in any of claims 12 to 17 wherein water released from the second space is neutralised chemically before disposal.

19. A method as claimed in any of claims 12 to 18 wherein after de-watering of the solids remaining in the first space is sufficiently advanced, they are removed by vehicle which enters said space.

## Ansprüche

1. Ein Sammelbehälter zum Entwässern von Schlammbrühe umfassend eine wasserdichte Umrandung (12, 61) auf einer undurchlässigen Grundfläche (11), wobei der umrandete Raum mittels einer wasserdurchlässigen Wand (4, 43, 53) in einen ersten Raum (2, 44, 54) und einen zweiten Raum (13, 45, 55) unterteilt ist und der zweite Raum (13, 45, 55) einen Wasserauslaß aufweist, der im Gebrauch mit Hilfe einer Regelvorrichtung (AB 62) so einstellbar ist, daß der Flüssigkeitsauslauf bei zunehmend niedrigeren Niveauhöhen in dem zweiten Raum ermöglicht wird.

2. Ein Sammelbehälter nach Anspruch 1, bei dem die Regelvorrichtung einen Wehrdamm (62) umfaßt, der aus einer Reihe von horizontal verlaufenden Platten (64) gebildet ist, die übereinander angeordnet sind und von oben her nacheinender entfernbar sind, um die Dammhöhe zu verringern.

3. Ein Sammelbehälter nach Anspruch 1, bei dem die Regelvorrichtung eine Reihe von Ablaßhähnen aufweist, die übereinander angeordnet sind.

4. Ein Sammelbehälter nach einem der vorhergehenden Ansprüche, mit einem abdichtbaren Verschluß (5) in einer Wand des ersten Raumes (2), der groß genug ausgebildet ist, um einem Fahrzeug den Zugang zur Weiterverarbeitung der entwässerten Feststoffe zu ermöglichen.

5. Ein Sammelbehälter nach einem der vorhergehenden Ansprüche, bei dem die für Wasser durchlässige Wand (4) aus aufrechtstehenden, langgestreckten Platten (7) gebildet ist, die durch einen Rahmenaufbau so zusammengehalten sind, daß ein kleiner Spalt zwischen einander benachbarten Platten verbleibt.

6. Ein Sammelbehälter nach Anspruch 5, bei dem die Platten aus ungehobeltem, gesägtem Holz bestehen.

7. Ein Sammelbehälter nach einem der vorhergehenden Ansprüche, bei dem eine Reihe von ersten (44) und zweiten Kammern (54) aneinandergrenzend so angeordnet sind, daß sie eine oder mehrere Wände gemeinsam haben.

8. Ein Sammelbehälter nach einem der vorhergehenden Ansprüche, bei dem innerhalb einer einzigen Umrandung zwei erste Räume (201, 202), zwei durchlässige Wände (213, 203, 204) und ein einziger zweiter Raum, der den beiden ersten Räumen gemeinsam ist, vorgesehen sind.

9. Ein Sammelbehälter nach einem der vorhergehenden Ansprüche, bei dem ein dritter Raum (207) das aus dem Wasserauslaß ausfließende Wasser aufnimmt und für eine gewisse Zeitspanne vor dessen Verwendung speichert.

10. Ein Sammelbehälter nach einem der vorhergehenden Ansprüche, der aus einer Mehrzahl von vorgefertigten Metall- oder Betonteilen gebildet ist.

11. Ein Sammelbehälter nach einem der Ansprüche 1 bis 9, der als ein einstückiger transportabler Tank ausgebildet ist.

12. Ein Verfahren zum Entwässern von Schlammbrühe im Absitzverfahren in einer auf einer wasserundurchlässigen Grundfläche angeordneten wasserdichten Umrandung (12, 61), wobei der von der Umrandung eingeschlossene Raum mittels einer durchlässigen Wand (4, 43, 53) zumindest in einen ersten Raum (2, 44, 45) und einen zweiten Raum (13, 45, 55) unterteilt ist, umfassend die Schritte :
zu Beginn wird ein Anteil an Schlammbrühe in den ersten Raum eingebracht, damit dieser durch die Wand in den zweiten Raum fließt ;
die Feststoffe können sich absetzen ;
es wird ermöglicht, daß klareres Wasser aus dem zweiten Raum, aus dessen oberem Wasserniveau, abfließt, wodurch ermöglicht wird, daß die Schlammbrühe durch die durchlässige Wand aus dem ersten in den zweiten Raum fließt und sich die Feststoffe in den Zwischenräumen der Wand ansammeln ;
anschließend wird Wasser aus zunehmend niedrigeren Niveaubereichen aus dem zweiten Raum ausgelassen, während der Pegelstand im ersten Raum höher bleibt und
das im ersten Raum befindliche Wasser kann durch die durchlässige Wand hindurchsickern, wobei die von der Wand zurückgehaltenen Feststoffe als Filtermedium dienen.

13. Ein Verfahren nach Anspruch 12, bei dem anschließend an den zu Beginn eingefüllten Anteil an Schlammbrühe fortlaufend weitere Schlammbrühe in den ersten Raum eingefüllt wird, einerseits bis dieser soweit wie gewünscht gefüllt ist und andererseits solange wie sich die Schlammbrühe in genügender Schnelligkeit durch die durchlässige Wand entwässert.

14. Ein Verfahren nach Anspruch 13, bei dem die zu Beginn eingefüllte Schlammbrühe einen höheren Feststoffanteil aufweist, als man in den später zugegebenen Schlammbrühen vermutet, um ein Ansammeln von Feststoffen in der durchlässigen Wand zu Beginn des Verfahrens sicher zu stellen.

15. Ein Verfahren nach einem der Ansprüche 12 bis 14, bei dem nach einer Anlaufzeit, während der Flüssigkeit und Feststoffe durch die durchlässige Wand in den zweiten Raum geflossen sind, diese aus dem zweiten Raum wieder in den ersten Raum zurückgepumpt werden.

16. Ein Verfahren nach einem der Ansprüche 12 bis 15, bei dem Feststoffpartikel enthaltendes Material in den ersten Raum eingebracht wird, um das Absetzen der Feststoffe zu unterstützen.

17. Ein Verfahren nach einem der Ansprüche 12 bis 16, bei dem die Art der Schlammbrühen, die nacheinander in den Sammelbehälter eingefüllt werden, sowohl hinsichtlich des Anteiles der in ihnen enthaltenen Feststoffe als auch nach deren Art einander angepaßt werden, um ein optimales Absitzen zu ermöglichen.

18. Ein Verfahren nach einem der Ansprüche 12 bis 17, bei dem das aus dem zweiten Raum ausgelassene Wasser vor seiner Weiterverwendung chemisch neutralisiert wird.

19. Ein Verfahren nach einem der Ansprüche 12 bis 18, bei dem nach ausreichend erfolgter Entwässerung der im ersten Raum verbleibenden Feststoffe diese mit Hilfe eines Fahrzeuges abtransportiert werden, das in den ersten Raum einfährt.

## Revendications

1. Entrepôt pour la déshydratation de boues comprenant une enceinte étanche à l'eau (12, 61) sur une base imperméable (11), cette enceinte étant divisée en un premier espace (2, 44, 54) et un second espace (13, 45, 55) par une paroi perméable à l'eau (4, 43, 53), caractérisée en ce que le second espace (13, 45, 55) comporte une sortie d'eau commandée par un moyen (A, B, 62) qui peut permettre en cours d'utilisation un écoulement à des niveaux de liquide progressivement inférieurs dans ce second espace.

2. Entrepôt suivant la revendication 1, caractérisé en ce que le moyen comprend un déversoir (62) formé d'une série de panneaux horizontaux (64) placés l'un sur l'autre et pouvant être enlevés progressivement du sommet de manière à abaisser le niveau du déversoir.

3. Entrepôt suivant la revendication 1, caractérisé en ce que le moyen comprend une série de robinets positionnés l'un au-dessus de l'autre.

4. Entrepôt suivant l'une quelconque des revendications précédentes, caractérisé en ce qu'il comporte une fermeture obturable (5) dans une paroi du premier espace (2) suffisamment grande pour admettre un véhicule permettant de manipuler les matières solides déshydratées.

5. Entrepôt suivant l'une quelconque des revendications précédentes, caractérisé en ce que la paroi perméable à l'eau (4) se compose de panneaux allongés verticaux (7) maintenus par un châssis, avec un léger intervalle entre les panneaux adjacents.

6. Entrepôt suivant la revendication 5, caractérisé en ce que les panneaux sont en bois de sciage brut.

7. Entrepôt suivant l'une quelconque des revendications précédentes, caractérisé en ce qu'une série de première (44) et seconde chambres (54) sont agencées de façon adjacente de manière à partager une ou plusieurs parois.

8. Entrepôt suivant l'une quelconque des revendications précédentes, caractérisé en ce que dans une seule enceinte sont agencés deux premiers espaces (201, 202), deux parois perméables (203, 204) et un seul espace commun à ces deux premiers espaces.

9. Entrepôt suivant l'une quelconque des revendications précédentes, caractérisé en ce qu'un troisième espace (207) reçoit l'eau de la sortie d'eau et la maintient pendant une certaine période de temps avant son évacuation.

10. Entrepôt suivant l'une quelconque des revendications précédentes, caractérisé en ce qu'il est formé de plusieurs sections de métal ou béton préfabriquées.

11. Entrepôt suivant l'une quelconque des revendications 1 à 9, caractérisé en ce qu'il a la forme d'un simple réservoir transportable.

12. Procédé de déshydratation de boues par décantation par gravité dans une enceinte étanche à l'eau (12, 61) sur une base imperméable, l'enceinte étant divisée en au moins un premier espace (2, 44, 54) et un second espace (13, 45, 55) par une paroi perméable (4, 43, 53), comprenant les étapes suivantes : introduire initialement une certaine quantité de boue dans le premier espace de telle sorte qu'elle s'écoule par la paroi dans le second ; laisser les matières solides décanter ; permettre l'écoulement de l'eau plus claire du second espace au niveau alors supérieur de l'eau, de sorte que la boue a alors tendance à s'écouler du premier vers le second espace par la paroi perméable et recueillir les matières solides dans les interstices de cette paroi ; ensuite libérer l'eau à des niveaux progressivement inférieurs du second espace pendant que le niveau dans le premier espace reste plus élevé ; et laisser l'eau dans le premier espace s'écouler à travers la paroi perméable en utilisant les matières solides contenues dans la paroi comme milieu filtrant.

13. Procédé suivant la revendication 12, caractérisé en ce qu'après la quantité initiale de boue, d'autres quantités continuent à être ajoutées au premier espace jusqu'à ce qu'il soit considéré comme plein suivant les nécessités et pendant aussi longtemps que la boue continue à se déshydrater à une vitesse satisfaisante à travers la paroi perméable.

14. Procédé suivant la revendication 13, caractérisé en ce que la quantité initiale de boue a une proportion de matières solides plus élevée que la proportion attendue dans celle qui est à ajouter par la suite, en assurant ainsi la collecte initiale des matières solides dans la paroi perméable.

15. Procédé suivant l'une quelconque des revendications 12 à 14, caractérisé en ce qu'après une période initiale au cours de laquelle le liquide et les matières solides ont tous deux traversé la paroi perméable pour aller dans le second espace, ils sont repompés du second espace dans le premier espace.

16. Procédé suivant l'une quelconque des revendications 12 à 15, caractérisé en ce qu'une matière particulaire solide est ajoutée au premier espace pour faciliter la décantation des matières solides.

17. Procédé suivant l'une quelconque des revendications 12 à 16, caractérisé en ce que les natures des boues ajoutées successivement à l'entrepôt sont assorties en termes de proportions et de natures de matières solides de manière à optimaliser leur décantation.

18. Procédé suivant l'une quelconque des revendications 12 à 17, caractérisé en ce que l'eau libérée du second espace est neutralisée chimiquement avant son évacuation.

19. Procédé suivant l'une quelconque des revendications 12 à 18, caractérisé en ce que lorsque la déshydratation des matières solides restant dans le premier espace est suffisamment avancée, elles sont enlevées par un véhicule qui entre dans cet espace.

FIG.1

EP 0 195 679 B1

FIG.2

EP 0 195 679 B1

FIG 3

FIG.4

FIG.5

FIG.6

FIG.9

FIG.7

FIG.8

−201−

−208−

203

205

−207

20

206

−202−

−208−

FIG.10

221

222

220

223

FIG.11